# EUROPEAN PATENT SPECIFICATION

(11) **EP 0 727 139 B1**
(45) Date of publication and mention of the grant of the patent: **15.09.1999**
(21) Application number: 96830070.7
(22) Date of filing: 16.02.1996
(51) Int. Cl.: A01J 25/12, A01J 25/00

(54) **Apparatus for sizing and metering cheese, in particular a spun-paste cheese**
Verfahren zum Formen und Dosieren von Käse, insbesondere Pasta-filata Käse
Appareil pour mettre en forme et pertramer du fromage, en particulier de type pasta-filata

(30) Priority: 17.02.1995 IT MI950295
(43) Date of publication of application: 21.08.1996
(73) Proprietor: Montesissa, Matteo, 27038 Robbio Lomellina, Pavia (IT); Montesissa, Giancarlo, 27038 Robbio Lomellina, Pavia (IT)
(72) Inventor: Montesissa, Matteo, 27038 Robbio Lomellina, Pavia (IT); Montesissa, Giancarlo, 27038 Robbio Lomellina, Pavia (IT)
(74) Representative: Cicogna, Franco

(56) References cited:
- DE-A- 1 966 433
- FR-A- 2 145 491
- US-A- 4 441 393

## Description

### BACKGROUND OF THE INVENTION

The present invention relates to an apparatus for sizing and metering cheese, in particular a spun-paste cheese.

Apparatus for sizing spun-paste cheese are already known. Such a prior apparatus operates with a constant sizing volume and, accordingly, will provide cheese pieces having weights varying depending on the characteristics of the cheese being sized. An apparatus according to the preamble of Claim 1 is known from FR-A-2 145 491.

Thus, these prior cheese sizing machines are affected by the drawback that they can not properly size different types of cheese while providing a substantially even sizing weight; moreover, these prior machines are not suitable to change the sized-cheese volume depending on requirements.

### SUMMARY OF THE INVENTION

Accordingly, the aim of the present invention is to overcome the above mentioned problem, by providing an apparatus for sizing and metering cheese which allows to change, depending on requirements, the sizing volume as well as the volume of the cheese pieces obtained by the sizing operation.

Within the scope of the above mentioned aim, a main object of the present invention is to provide such a cheese sizing apparatus which allows a very accurate volume and sizing weight to be obtained.

Another object of the present invention is to provide such a cheese sizing apparatus which is very simple construction-wise and which, moreover, is very reliable and safe in operation.

According to one aspect of the present invention, the above mentioned aim and objects, as well as yet other objects, which will become more apparent hereinafter, are achieved by a cheese sizing and metering apparatus, particularly for sizing and metering a spun-paste cheese, whereby said apparatus comprises a cheese loading hopper, for loading a cheese to be sized, said cheese loading hopper being provided, at a bottom portion thereof, with cheese conveying means, for driving said cheese against a cheese sizing and metering element, said cheese sizing and metering element being rotatable about a substantially horizontal axis and being provided with a plurality of cheese metering recesses, shaving means being moreover provided for shaving said cheese metering recesses, as well as adjusting means for adjusting the useful volume of said metering recesses.

### BRIEF DESCRIPTION OF THE DRAWINGS

Further characteristics and advantages of the cheese sizing and metering apparatus according to the present invention will become more apparent hereinafter from the following detailed description of a preferred, though not exclusive, embodiment of said apparatus, which is illustrated, by way of a merely indicative example, in the figures of the accompanying drawings, where:

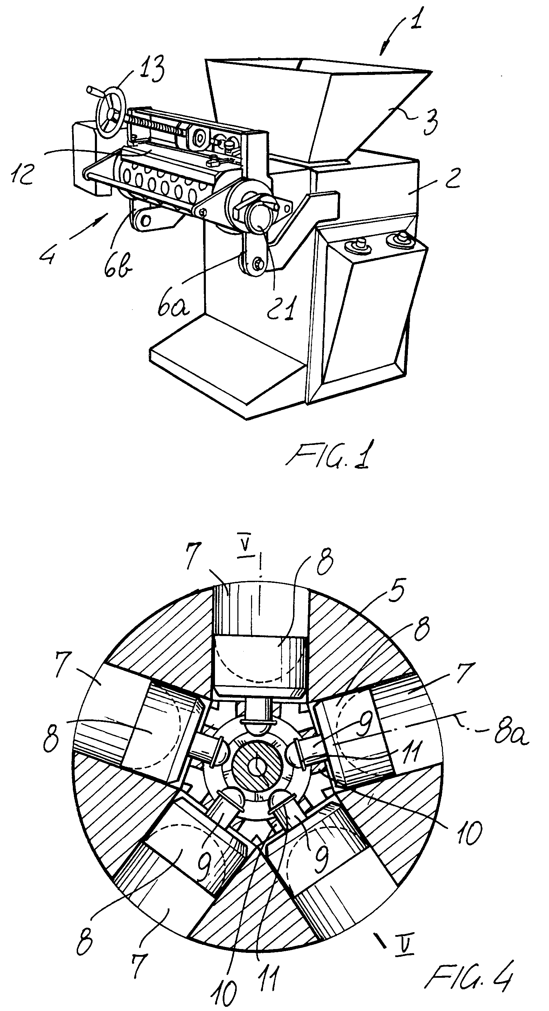

Figure 1 is a schematic perspective view illustrating the apparatus according to the invention;

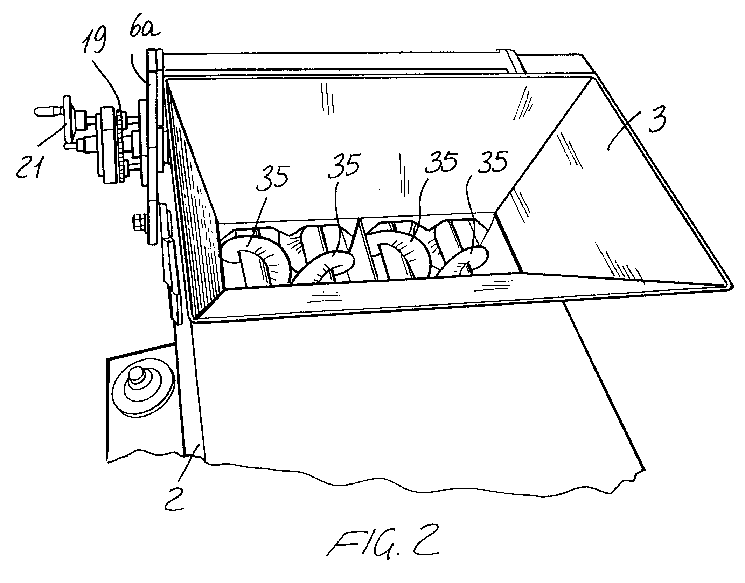

Figure 2 is a top perspective view illustrating the loading hopper included in the apparatus according to the invention;

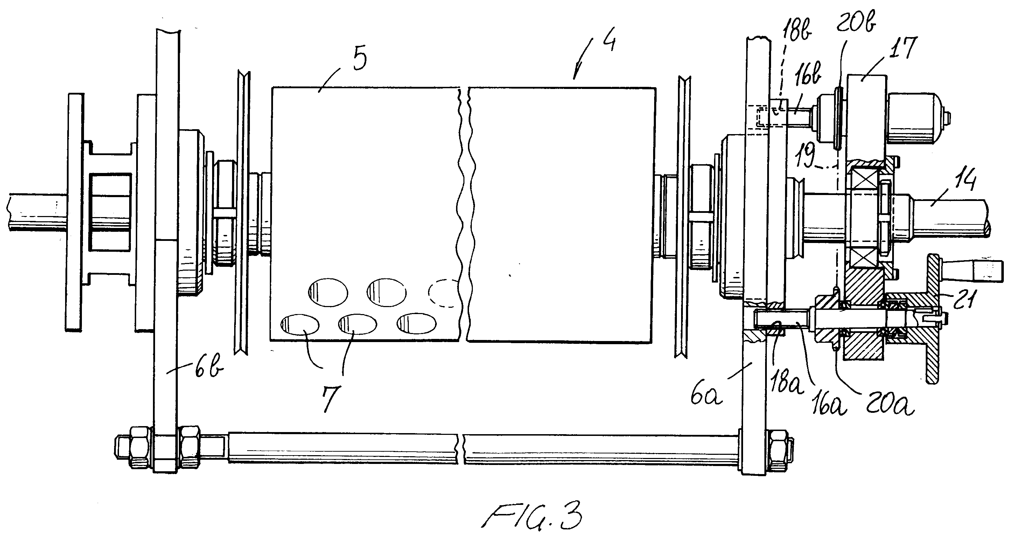

Figure 3 is a top plan view illustrating the cheese sizing and metering element;

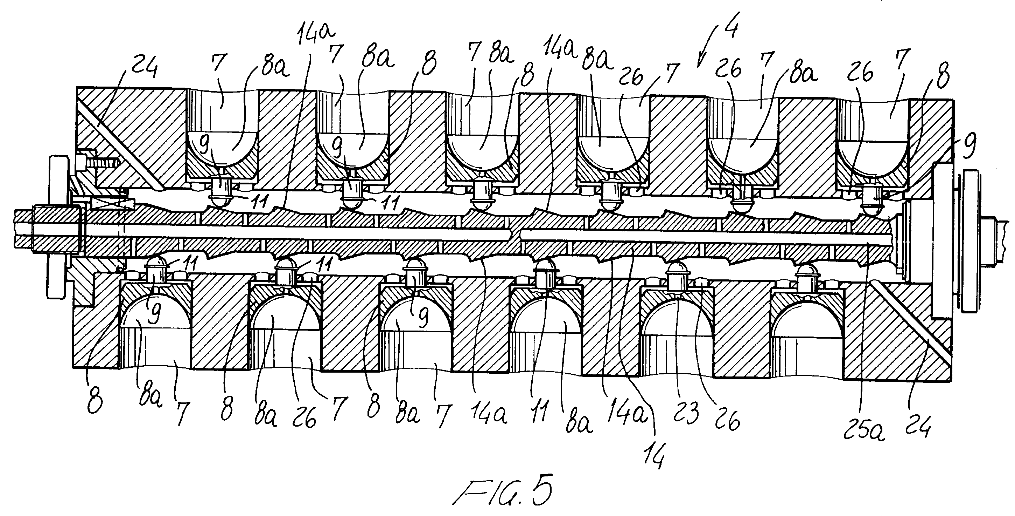

Figure 4 is a cross-sectional view illustrating said cheese sizing and metering element;
Figure 5 is a cross-sectional view of Figure 4, substantially taken along the section line V-V.

### DESCRIPTION OF THE PREFERRED EMBODIMENTS

With reference to the number references of the above figures, the apparatus according to the invention, which has been generally indicated by the reference number 1, comprises a base 2, supporting a cheese loading hopper 3, and a cheese sizing and metering element 4 which is laterally arranged near the bottom of the cheese loading hopper 3 and can turn about a substantially horizontal axis.

More specifically, the cheese loading hopper 3 is provided, near the bottom thereof, with conveying or driving means for driving the cheese to be sized, which is loaded into said hopper 3, against the sizing and metering element 4. Said conveying or driving means are suitably constituted by scrolls or volutes 35 having horizontal axes and arranged substantially perpendicularly to the rotary axis of the mentioned sizing and metering element 4, and being rotatively driven, about their axes, in a per se known manner, by one or more driving motors, housed in the base 2 and not shown, for simplicity.

In the embodiment being illustrated, are provided two pairs of scrolls 35, which rotate in opposite directions, and which will properly drive, by a suitable pressure, the cheese loaded into the hopper 3, against the side surface of said cheese sizing and metering element 4, which is turned to a side of the bottom of the hopper 3.

In particular, said cheese sizing and metering element 4 comprises a drum 5 which is rotatably supported about its rotary axis 5a, by a pair of shoulders 6a and 6b affixed to said base 2.

The drum 5 is provided, on the outer shell thereof, with a plurality of cheese metering recesses 7, having a substantially cylindrical shape with an axis perpendicular to the axis 5a.

More specifically, the cheese metering recesses 7 are arranged about the axis 5a of the drum, and in axial rows, having a parallel offset relationship with respect to the axis 5a for the metering recesses pertaining to two adjoining rows of metering recesses.

The cheese metering recesses 7 are delimited, on their side facing the axis 5a, by bottom pieces 8 which can be axially displaced, by a reduced displacement stroke, inside the related metering recess 7, so as to change the useful or operating volume of the latter.

The bottom pieces 8 are provided with a substantially cylindrical shape with a concavity 8a on the base thereof facing the open end portion of the related metering recess and are provided, on the opposite base, with a pin 9 passing through the bottom wall 10 of the metering recess 7, on which is mounted a stop ring element 11, provided for abutting against the wall 10, so as to restrain or limit the displacement of the bottom piece 9 in the direction of the open end portion of the metering recess 7.

The sliding of the bottom pieces 9 in the direction of the axis 5a of the drum 5 is restrained by the provision of said bottom wall 10.

The apparatus comprises moreover shaving means for "shaving" the cheese metering recesses 7, said shaving means suitably comprising a shaving blade 12, facing the shell of the drum 5 and being supported by the bearing framework of the apparatus.

The position of the shaving blade 12, with respect to the drum 5, can be adjusted by a small wheel 13 which, through a threaded shaft coupled with a ring-nut, operates on the shaving blade 12 in order to cause the latter to be displaced toward the drum 5 and/or away of said drum 5.

The apparatus also comprises adjusting means for adjusting the useful or operating volume of the metering recesses 7.

Said volume adjusting means are substantially constituted by a cam shaft 14, which is coaxially housed in an axial cavity 15 inside the drum 5.

More specifically, the cam shaft 14 is provided with a plurality of cams 14a which have a slanted contour which is inclined with respect to the axis 5a of the drum 5 and which are engaged with that end portion of the pins 9 facing the axis 5a.

In particular, the cam shaft 14 can be driven, along the axis 5a, with respect to the drum 5 so as to change, owing to the specifically designed shape of the cams 14a thereof, the positions of the bottom pieces 8 inside the metering recesses 7.

The displacement of the cam shaft 14 along the axis 5a, in particular, is obtained by a pair of threaded spindles or shafts 16a and 16b which are rotatably supported about respective axes extending parallel to the axis 5a, by a plate 17 which also rotatably supports, about the axis 5a, the can shaft 14 and which is rigid with the latter in the displacement along this axis.

The threaded spindles 16a and 16b engages with nut screws 18a and 18b correspondingly defined on the shoulder 6a.

Moreover, the two threaded spindles 16a and 16b are rotatably coupled to one another, so as to turn about their respective axes, by a chain 19 meshing with pinions 20a and 20b keyed on the threaded shafts or spindles 16a and 16b.

The threaded spindle 16a is coupled, by its portion opposite to the shoulder 6a, to an adjusting wheel 21, by means of which an operator can change the position of the cam shaft 14 along the axis 5a, with respect to the drum 5, thereby changing the positions of the bottom pieces 8, inside the metering recesses 7, and changing in turn the operating volumes of said recesses, i.e. the cheese sizing volume.

In order to prevent, during the sizing process, liquid material from being trapped inside the metering recesses 7 as the cheese is processed therein, the bottom pieces 8 are provided with throughgoing passages 23 communicating with the axial cavity 15 in which the cam shaft 14 is housed.

This axial cavity 15, as shown, is provided with draining cut-outs 24, therethrough can be drained the liquid entrained by the cheese being sized and conveyed with processing water.

Likewise, the cam shaft 14 is also provided with inner channels 25a and 25b which can be coupled to supplying means for continuously supplying a sanitarizing liquid medium, such as water and which communicate with said cavity or hollow 15 so as to cause a sanitarizing liquid to be continuously circulated inside said cavity 15 to efficiently remove fat material coming from the metering recesses 7.

The bottom walls 10 of the metering recesses 7 are suitably provided with holes 26 for preventing liquid material and cheese particles from being trapped between the bottom pieces 8 and related bottom wall 10.

The apparatus for sizing and metering cheese according to the present invention operates as follows:

The cheese to be sized is loaded into the cheese loading hopper 3 in which, by means of the scrolls 35, it is driven against the side surface of the drum 5 which is rotatively driven about its rotary axis, by a known type of driving motor which for simplicity has not been shown.

The cheese, as driven by the scrolls 35, will fill the metering recesses 7 which, as the drum 5 turns about its axis 5a, will be caused to face the bottom of the loading hopper 3; the excess cheese will be removed by the shaving blade 12.

Thus, the cheese will be properly sized, and the several cheese pieces present in the metering recesses 7 will be unloaded, by gravity, on the bottom of the drum 5, owing to the turning movement of said drum 5.

As the sizing volume must be changed, it will be sufficient to operate the volume control wheel 21 so as to change the positions of the cams 14a with respect to the pins 9 of the bottom pieces 8.

The contact of the pins 9 and cams 14a, during the filling step of the metering recesses 7, will be assured by the pressure against the drum 5 exerted on the cheese.

In this connection it should be moreover pointed out that the subject apparatus further comprises a specifically designed washing system which operates with the apparatus in operation.

This washing system will allow to fully remove the excess of fat material contained in the spun-paste types of cheese.

Before use, the apparatus, moreover, must be washed by steam, without requiring to be disassembled.

Thus, it will be possible to perfectly clean the apparatus, thereby providing a better and longer preservation of the product.

From the above disclosure and the observation of the figures of the accompanying drawings, the great functionality and facility of use characterizing the apparatus for sizing and metering cheese, in particular spun-paste cheese, according to the present invention will be self evident.

Of course, this apparatus has been disclosed and illustrated by way of a merely indicative and not limitative example, and in order to demonstrate the main features of the present invention.

Accordingly, said apparatus may be subjected to any variations and modifications, all of which will come within the scope of the invention.

In practicing the invention, the used materials, provided that they are compatible to the intended application, as well as the contingent size and shapes, can be any, depending on requirements.

## Claims

1. A cheese sizing and metering apparatus, particularly for sizing and metering a spun-paste cheese, said apparatus comprising a cheese loading hopper, for loading a cheese to be sized, and a cheese sizing and metering element being rotatable about a substantially horizontal axis and being provided with a plurality of cheese metering recesses, characterized in that said cheese loading hopper is provided, at a bottom portion thereof, with cheese conveying means, for driving said cheese against the cheese sizing and metering element, and that shaving means are provided for shaving said cheese metering recesses, as well as adjusting means for adjusting the useful volume of said metering recesses.

2. An apparatus according to Claim 1, characterized in that said cheese conveying means comprise a plurality of scrolls which can be rotatively driven about respective substantially horizontal rotary axes and laterally facing said cheese sizing and metering element.

3. An apparatus according to the preceding claims, characterized in that said cheese sizing and metering element comprises a drum, which can be rotatively driven about a rotary axis thereof, horizontally arranged, said cheese metering recesses being defined on a shell of said drum.

4. An apparatus according to one or more of the preceding claims, characterized in that said recesses are each delimitated, in the direction of said axis of said drum, by a movable bottom piece which can be driven toward or away from said axis of said drum, in order to change the operating volume of the related metering recess.

5. An apparatus according to one or more of the preceding claims, characterized in that said metering recesses have a substantially cylindrical shape and have their axes oriented substantially perpendicularly to said axis of said drum.

6. An apparatus according to one or more of the preceding claims, characterized in that said adjusting means for adjusting the volume of said metering recesses comprise a shaft cam, coaxially housed in said drum and which can be controllably driven along the axis of said drum, said cams having a slanted contour which is inclined with respect to the axis of said drum and being provided for engaging with pin elements rigid with said bottom pieces of said metering recesses in order to cause the positions of said bottom pieces inside said related metering recesses to be changed in a direction substantially perpendicular to the axis of said drum.

7. An apparatus according to one or more of the preceding claims, characterized in that said cam shaft is driven, for displacement along said axis of said drum, by a screw-nut assembly, which can be driven through a controlling wheel.

8. An apparatus according to one or more of the preceding claims, characterized in that said shaving means comprise a shaving blade facing the shell of said drum, the position of said shaving blade with respect to said drum being adjustable.

9. An apparatus according to one or more of the preceding claims, characterized in that said metering recesses are distributed about the axis of said drum and arranged along axial rows, the metering recesses pertaining to two adjoining rows being offset in a direction parallel to said axis of said drum.

10. An apparatus according to one or more of the preceding claims, characterized in that said bottom pieces are traversed by throughgoing passages for a liquid for processing said cheese, said passages communicating with an axial cavity formed in said drum and provided with at least a draining port for draining said liquid.

11. An apparatus according to one or more of the preceding claims, characterized in that said cam shaft is provided with inner channels communicating with said cavity, housing said cam shaft, and which can be coupled to means for driving inside said cavity a washing liquid.

## Patentansprüche

1. Eine Vorrichtung, um Käse zurechtzuschneiden und zu dosieren, insbesondere um Käse mit einer schaumigen Masse zurechtzuschneiden und zu dosieren, wobei diese Vorrichtung einen Käsefülltrichter für die Zufuhr des zurechtzuschneidenden Käses umfaßt, und ein Bauteil, um den Käse zurechtzuschneiden und zu dosieren, um eine im wesentlichen horizontale Achse drehen kann und mit einer Vielzahl von Vertiefungen zum Dosieren des Käses ausgestattet ist, dadurch gekennzeichnet, daß dieser Käsefülltrichter in seinem unteren Bereich mit einer Käsefördervorrichtung ausgestattet ist, um diesen Käse gegen das Bauteil, um den Käse zurechtzuschneiden und zu dosieren, zu befördern, und daß eine Schneidvorrichtung bereitgestellt ist, um diese Vertiefungen zum Dosieren des Käses abzuschaben, sowie eine Einstellvorrichtung, um den Nutzinhalt dieser Dosiervertiefungen zu justieren.

2. Eine Vorrichtung nach Anspruch 1, dadurch gekennzeichnet, daß diese Käsefördervorrichtung eine Vielzahl von Schnecken umfaßt, die um entsprechende, im wesentlichen horizontale Rotationsachsen in Drehung versetzt werden können und der Seite dieses Bauteils, um den Käse zurechtzuschneiden und zu dosieren, gegenüberliegen.

3. Eine Vorrichtung nach den vorhergehenden Ansprüchen, dadurch gekennzeichnet, daß dieses Bauteil, um den Käse zurechtzuschneiden und zu dosieren, eine Walze umfaßt, die um ihre horizontal verlaufende Rotationsachse in Drehung versetzt werden kann, wobei diese Vertiefungen zum Dosieren des Käses auf einer Verkleidung dieser Walze gebildet sind.

4. Eine Vorrichtung nach einem oder mehreren der vorhergehenden Ansprüche, dadurch gekennzeichnet, daß sämtliche dieser Vertiefungen in der Richtung dieser Achse dieser Walze von einem beweglichen Bodenteil abgeschlossen werden, das zu dieser Achse dieser Walze oder davon weg bewegt werden kann, um den Nutzinhalt der entsprechenden Dosiervertiefungen einzustellen.

5. Eine Vorrichtung nach einem oder mehreren der vorhergehenden Ansprüche, dadurch gekennzeichnet, daß diese Dosiervertiefungen eine im wesentlichen zylindrische Form besitzen und ihre Achsen im wesentlichen senkrecht zu dieser Achse dieser Walze ausgerichtet sind.

6. Eine Vorrichtung nach einem oder mehreren der vorhergehenden Ansprüche, dadurch gekennzeichnet, daß diese Einstellvorrichtung, um das Volumen dieser Dosiervertiefungen zu justieren, eine Nockenwelle umfaßt, die koaxial dazu ausgerichtet in dieser Walze untergebracht ist und gesteuert entlang der Achse dieser Walze verschoben werden kann, wobei diese Nocken einen schräg verlaufenden Umriß besitzen, der bezüglich der Achse dieser Walze geneigt und dazu bereitgestellt ist, in Stiftteile einzugreifen, die mit diesen Bodenteilen dieser Dosiervertiefungen fest verbunden sind, um eine Veränderung der Stellungen dieser Bodenteile innerhalb dieser entsprechenden Dosiervertiefungen in einer Richtung zu bewirken, die im wesentlichen senkrecht zur Achse dieser Walze steht.

7. Eine Vorrichtung nach einem oder mehreren der vorhergehenden Ansprüche, dadurch gekennzeichnet, daß diese Nockenwelle zur Bewegung entlang dieser Achse dieser Walze durch eine Schraubenmuttervorrichtung angetrieben wird, die über ein Stellrad betätigt werden kann.

8. Eine Vorrichtung nach einem oder mehreren der vorhergehenden Ansprüche, dadurch gekennzeichnet, daß diese Schneidvorrichtung eine Schneidklinge umfaßt, die der Verkleidung dieser Walze gegenüberliegt, wobei die Stellung dieser Schneidklinge bezüglich dieser Walze verstellbar ist.

9. Eine Vorrichtung nach einem oder mehreren der vorhergehenden Ansprüche, dadurch gekennzeichnet, daß diese Dosiervertiefungen um die Achse dieser Walze verteilt und entlang axialer Reihen angeordnet sind, wobei die zwei benachbarten Reihen zugehörigen Dosiervertiefungen jeweils entlang einer Richtung versetzt sind, die parallel zu dieser Achse dieser Walze verläuft.

10. Eine Vorrichtung nach einem oder mehreren der vorhergehenden Ansprüche, dadurch gekennzeichnet, daß diese Bodenteile mit durchgehenden Löchern für eine Flüssigkeit zur Verarbeitung dieses Käses versehen sind, wobei diese Durchgänge mit einem in dieser Walze gebildeten axialen Hohlraum in Verbindung stehen und zumindest mit einer Auslaßöffnung ausgestattet sind, um diese Flüssigkeit abzulassen.

11. Eine Vorrichtung nach einem oder mehreren der vorhergehenden Ansprüche, dadurch gekennzeichnet, daß diese Nockenwelle mit inneren Kanälen ausgestattet ist, die mit diesem Hohlraum, der diese Nockenwelle enthält, in Verbindung stehen und an eine Vorrichtung angeschlossen werden können, um in diesen Hohlraum eine Waschflüssigkeit einzuleiten.

## Revendications

1. Appareil pour mettre en forme et doser du fromage, spécialement conçu pour mettre en forme et doser du fromage de type pasta-filata, ledit appareil comportant une trémie pour charger le fromage à mettre en forme ainsi qu'un organe de mise en forme et de dosage du fromage entraîné en rotation autour d'un axe sensiblement horizontal et pourvu d'une pluralité d'évidements de dosage du fromage, caractérisée en ce que la trémie pour charger le fromage est munie dans sa partie basse de moyens pour transporter le fromage pour ensuite le pousser contre l'organe de mise en forme et de dosage du fromage, et en ce que des moyens de raclage sont pourvus pour racler les évidements de dosage du fromage, ainsi que des moyens de réglage pour régler le volume utile desdits évidements de dosage.

2. Appareil selon la revendication 1, caractérisé en ce que lesdits moyens pour transporter le fromage comportent une pluralité de rouleaux qui peuvent être entraînés en rotation autour d'axes rotatifs sensiblement horizontaux respectifs, latéralement en face dudit organe de mise en forme et de dosage du fromage.

3. Appareil selon la revendication précédente, caractérisé en ce que ledit organe de mise en forme et de dosage du fromage comporte un tambour qui peut être entraîné en rotation autour d'un axe rotatif de celui-ci, disposé horizontalement, lesdits évidements de dosage du fromage étant définis sur le corps dudit tambour.

4. Appareil selon une ou plusieurs des revendications précédentes, caractérisé en ce que lesdits évidements sont chacun délimités en direction dudit axe dudit tambour, par une partie inférieure amovible qui peut être entraînée vers ou éloignée dudit axe dudit tambour, afin de modifier le volume de service de l'évidement de dosage dont il est question.

5. Appareil selon une ou plusieurs des revendications précédentes, caractérisé en ce que lesdits évidements de dosage présente une forme sensiblement cylindrique et leurs axes sont orientés de manière sensiblement perpendiculaire audit axe dudit tambour.

6. Appareil selon une ou plusieurs des revendications précédentes, caractérisé en ce que lesdits moyens de réglage qui permettent de régler le volume desdits évidements de dosage comportent un arbre à cames, logé coaxialement dans ledit tambour et qui peut être entraîné de façon contrôlable le long de l'axe dudit tambour, lesdites cames présentant un contour incliné par rapport à l'axe dudit tambour et s'engageant dans des broches rigides dans les parties inférieures desdits évidements de dosage, afin d'entraîner le changement des positions desdites parties inférieures à l'intérieur desdits évidements de dosage correspondants dans une direction sensiblement perpendiculaire à l'axe dudit tambour.

7. Appareil selon une ou plusieurs des revendications précédentes, caractérisé en ce que ledit arbre à cames est entraîné pour être déplacé le long dudit axe dudit tambour par un montage à écrous qui peut être entraîné au moyen d'une roue de commande.

8. Appareil selon une ou plusieurs des revendications précédentes, caractérisé en ce que lesdits moyens de raclage comportent une lame de raclage face au corps dudit tambour, la position de ladite lame de raclage étant réglable par rapport audit tambour.

9. Appareil selon une ou plusieurs des revendications précédentes, caractérisé en ce que lesdits évidements de dosage sont répartis autour de l'axe dudit tambour et aménagés le long de rangées axiales, les évidements de dosage relatifs à deux rangées avoisinantes étant décalés dans une direction paralléle audit axe dudit tambour.

10. Appareil selon une ou plusieurs des revendications précédentes, caractérisé en ce que lesdites parties inférieures sont traversées par des passages allant de bout en bout pour un liquide prévu pour traiter ledit fromage, lesdits passages communiquant avec une cavité axiale aménagée dans ledit tambour et pourvue d'au moins un orifice de drainage pour vider ledit liquide.

11. Appareil selon une ou plusieurs des revendications précédentes, caractérisé en ce que ledit arbre à cames est pourvu de rainures intérieures communiquant avec ladite cavité, logeant ledit arbre à cames, lesquelles peuvent être associées à des moyens conçus pour introduire un liquide de nettoyage à l'intérieur de ladite cavité.
